# EUROPEAN PATENT APPLICATION

(11) **EP 1 614 794 A2**
(43) Date of publication of application: **11.01.2006**
(21) Application number: 05102384.4
(22) Date of filing: 24.03.2005
(51) Int. Cl.: D06F 37/20, D06F 39/08

(54) **Pressure and vibration sensitive apparatus**

(30) Priority: 21.05.2004 KR 2004036206
(71) Applicant: SAMSUNG ELECTRONICS CO., LTD., Suwon-si, Gyeonggi-Do 442-742 (KR)
(72) Inventor: Kim, Tai Eun, Youngtong-Gu Suwon-si Gyeonggi-Do (KR); Kang, Young Hoon, Youngtong-Gu Suwon-si Gyeonggi-Do (KR)
(74) Representative: Grey, Ian Michael

(57) **Abstract**

A pressure and vibration sensing apparatus designed to sense pressure together with vibration through one apparatus. The pressure and vibration sensing apparatus includes a case adapted to be mounted in a machine generating vibration and having an inlet communicated with a source of pressure, a pressure sensor sensing pressure variation in the case, and a vibrating member retractably disposed in the case to induce the pressure variation in the case when vibration is generated in the machine.

## Description

The present invention relates to an apparatus for sensing pressure and vibration in a machine, the apparatus comprising a housing defining a chamber configured so that changes in pressure in the machine result in a corresponding change in pressure in the chamber.

A conventional cleaning apparatus employing water, such as a washing machine or a dishwasher, comprises a water level sensor to detect the level of water in the apparatus when water has been supplied thereto. One type of water level sensor is a pressure sensor which senses pressure variation caused by a variation in the water level in the apparatus. The apparatus may also comprise a vibration sensor to detect vibration generated whilst the machine is in operation.

In addition to cleaning apparatus, there are many other devices that include a separate pressure and vibration sensor. For instance, tanks for storing hazardous material that are sensitive to pressure or vibration and wind tunnel test equipment in a laboratory that are required to sense wind pressure and vibration.

In the known applications, however, the pressure and vibration sensors are manufactured separately and then disposed in the apparatus. Thus, the number of components in the apparatus having these sensors is increased, complicating the construction of the apparatus and increasing manufacturing costs.

Korean patent No. 10-338262, issued on May 27, 2002, discloses a sensor for detecting water level and vibration, wherein pressure and vibration detection is performed through a unitary device. The sensor for detecting both the level of the water and vibration comprises a diaphragm deformable according to air pressure variation caused by a variation in the level of water in a washing machine; a core displaceable according to the degree of deformation of the diaphragm; a case enclosing the diaphragm and the core; and a coil disposed in the case in such a manner that the case surrounds the coil to detect displacement of the core. The sensor for detecting the water level and the vibration further comprises a vibration sensing part provided to define a predetermined space in one side of the core and having a sloped surface, and a rolling member movably disposed in the vibration sensing part. Accordingly, when the vibration is generated, the rolling member in the vibration sensing part induces an inductance variation in the coil while moving along the sloped surface of the vibration sensing part thereby sensing vibration.

The sensor for detecting changes in the water level and vibration is integrated into one body. However, since the sensor comprises the diaphragm, the core, and the coil for sensing pressure variation according to a variation in water level, and comprises the vibration sensing part having the sloped surface and the rolling member for sensing vibration, the sensor comprises a considerable number of components, thereby complicating the construction and increasing manufacturing costs. Furthermore, since the sensor detects vibration caused by movement of the rolling member when the vibration is generated in a machine, it is difficult to sense minute vibrations and the magnitude thereof.

The present invention seeks to overcome or alleviate the disadvantages described above.

Apparatus for sensing pressure and vibration in a machine according to the present invention is characterised by a pressure sensor associated with the chamber for sensing said change in pressure therein, the housing being configured for attachment to a machine and having a vibration sensitive member suspended in the chamber that vibrates in response to vibration of said machine to induce a pressure variation in the chamber when the machine vibrates, said pressure sensor also being operable to sense said pressure variation caused by vibration of the vibration sensitive member.

In a preferred embodiment, the apparatus includes a pressure sensor case, the pressure sensor being disposed in the pressure sensor case remote from the chamber.

Preferably, the vibration sensitive member is mounted to the housing within the chamber by means of a resiliently deformable connecting element that connects the vibration sensitive member to the housing in a substantially air tight manner.

The pressure and vibration sensing apparatus may further comprise an outlet formed at the opposite side of the inlet of the case; and a connecting tube connecting the outlet and the pressure sensor to sense the pressure variation transferred through the outlet, the vibrating member being disposed between the inlet and the outlet within the case.

The pressure sensor may be a piezoelectric element.

The pressure and vibration sensing apparatus may further comprise an amplifying circuit to amplify an electrical signal output from the pressure sensor.

Embodiments of the invention will now be described, by way of example only, and with reference to the accompanying drawings, in which:
FIGURE 1 is a cross-sectional view illustrating the construction of a pressure and vibration sensing apparatus according to a first embodiment of the present invention;
FIGURE 2 is a graphical representation depicting pressure variation in a machine when sensing vibration with the pressure and vibration sensing apparatus consistent with the present invention;
FIGURE 3 is a graphical representation depicting a pressure variation in the machine when sensing pressure with the pressure and vibration sensing apparatus consistent with the present invention;
FIGURE 4 is a cross-sectional view illustrating the construction of a pressure and vibration sensing apparatus according to a second embodiment of the present invention; and
FIGURE 5 is a cross-sectional view illustrating an example of a washing machine to which the pressure and vibration sensing apparatus of the present invention is applied.

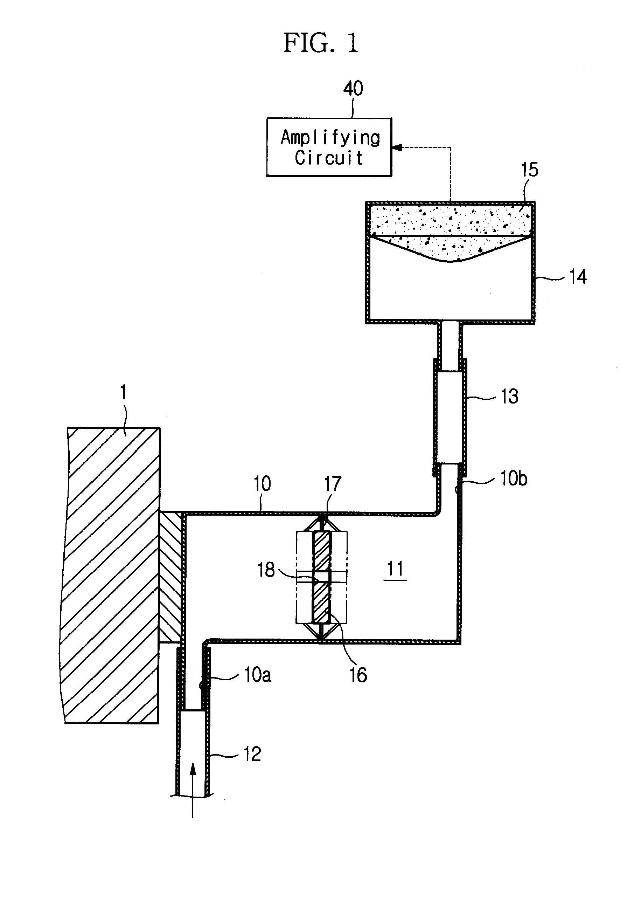

A pressure and vibration sensing apparatus according to the present invention and which is applicable to a machine that requires sensing of both pressure and vibration will now be described. Referring to FIGURE 1, the pressure and vibration sensing apparatus comprises a housing 10 mountable on an outer surface of a machine 1 that generates vibration to be sensed. The housing 10 encloses a pressure space 11 and is formed with an inlet 10a and an outlet 10b at opposite sides of the case 10. The inlet 10a is in communication with a source of pressure to be sensed and which is generated by the machine 1 through a pressure tube 12, such as a pipe, a hose, etc., so that the pressure space 11 in the case 1 can be subjected to pressure variation according to the pressure variation of the machine 1.

The pressure and vibration sensing apparatus also comprises a sensor housing 14 connected to the outlet 10b of the housing 10 via a connecting tube 13, and a pressure sensor 15 is disposed in the sensor housing 14. When the pressure in the housing 10 is transferred to an inner portion of the sensor housing 14 through the connecting tube 13, the pressure sensor 15 senses the pressure, so that the pressure variation in the machine 1 can be sensed. The pressure sensor 15 may comprise a typical piezoelectric element, which converts the pressure variation into an electrical signal, and detects variation in electrical signal, thereby sensing the pressure variation. The electrical signal output from the pressure sensor 26 is amplified through an amplifying circuit 40.

The pressure and vibration sensing apparatus also comprises a vibrating member 16 movably disposed in the pressure space 11 of the housing 10 in order to not only to allow the pressure variation in the machine 1 to be sensed through the pressure variation in the housing 10, but also to allow vibration transferred from the machine 1 to the housing 10 to be sensed when vibration is generated in the machine 1. The vibrating member 16 has a disc shape with a predetermined weight and an outer diameter smaller than an inner diameter of the housing 10. The vibrating member 16 is held in the housing 10 by a connecting member 17, which air-tightly connects an outer periphery of the vibrating member 16 and an inner surface of the housing 10, and stretches to allow movement of the vibrating member 16. The vibrating member 16 has an air vent in the center thereof that extends through the vibrating member 16 so that the pressure transferred to the inner portion of the housing 10 through the inlet 10a of the housing 10 is also be transferred to the pressure sensor 15 when measuring the pressure in the machine 1. The vibrating member 16 is preferably, but not necessarily, made of a rubber or a resin having a predetermined thickness, and the stretchable connecting member 17 is preferably, but not necessarily, made of a rubber having a thin film shape with good stretch.

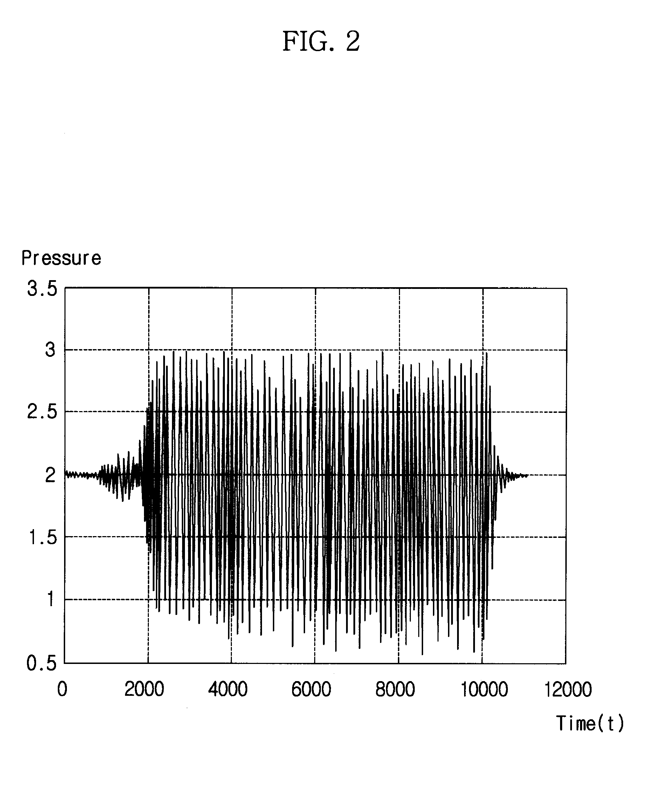

The pressure and vibration sensing apparatus is configured such that, when the case 10 vibrates due to the vibration of the machine 1, the vibrating member 16 in the housing 10 moves to induce a pressure variation in the pressure space 11 of the housing 10, thereby allowing the pressure sensor 15 to sense the vibration of the machine 1 by sensing pressure variation in the pressure space 11. It will be appreciated that the magnitude and frequency of vibration of the vibrating member 16 is proportional to a degree of vibration of the machine 1, and the pressure variation in the housing 10 is also proportional to the magnitude and frequency of vibration of the vibrating member 16. Thus, the pressure sensor 15 can sense vibration of the machine 1 by sensing pressure variation in the housing 10 caused by vibration of the machine 1. As such, when vibration is generated, pressure variation in the housing 10 has characteristics as depicted in FIGURE 2. That is, when vibration is generated in the machine 1, the pressure variation in the case 10 according to the movement of the vibrating member 16 is increased, and thus the electrical signal output from the pressure sensor 15 is also significantly varied. Accordingly, the pressure and vibration sensing apparatus of the present invention enables a relatively accurate sensing of the presence of vibration and the magnitude thereof. Furthermore, since the electrical signal output from the pressure sensor 15 is amplified through the amplifying circuit 40, vibration can be more accurately sensed.

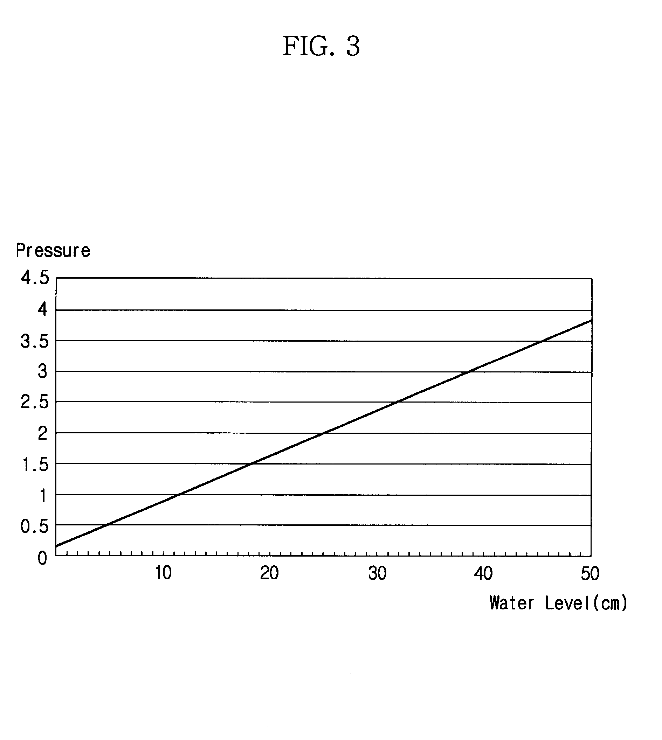

In the pressure and vibration sensing apparatus of the present invention, since spaces on both sides of the vibrating member 16 in the housing 10 are in communication with each other through the air vent 18 in the center of the vibrating member 16, the pressure in the case 10 varies according to the pressure variation in the machine 1 is transferred to the pressure sensor 15 through the air vent 18, thereby allowing the pressure sensor 15 to sense the pressure in the machine 1. When sensing the pressure as described above, as shown in FIGURE 3, the pressure in the housing 10 is raised in proportion to an increase of the pressure in the machine, and the electrical signal output from the pressure sensor 15 has characteristics proportional to the increase of the pressure in the machine 1, thereby enabling the pressure in the machine 1 to be sensed.

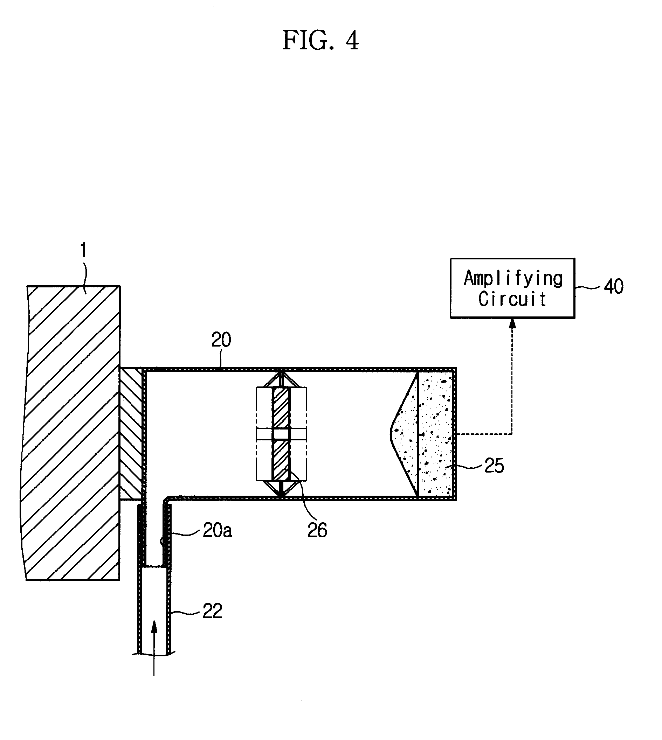

FIGURE 4 is a cross-sectional view illustrating the construction of a pressure and vibration sensing apparatus according to a second embodiment of the present invention. Unlike the pressure and vibration sensing apparatus according to the first embodiment, the pressure and vibration sensing apparatus according to the second embodiment has a pressure sensor 25 sensing an inner pressure of the housing 20 disposed in the case at the opposite side of the inlet 20a. Since the pressure and vibration sensing apparatus has a vibrating member 26 and a pressure tube 22, which are the same as those of the pressure and vibration sensing apparatus of the first embodiment, and the principle of sensing the pressure along with the vibration in the pressure and vibration sensing apparatus of the second embodiment is the same as that of the first embodiment, the description will be omitted.

An example of a washing machine having the pressure and vibration sensing apparatus of the invention applied thereto will be described as follows.

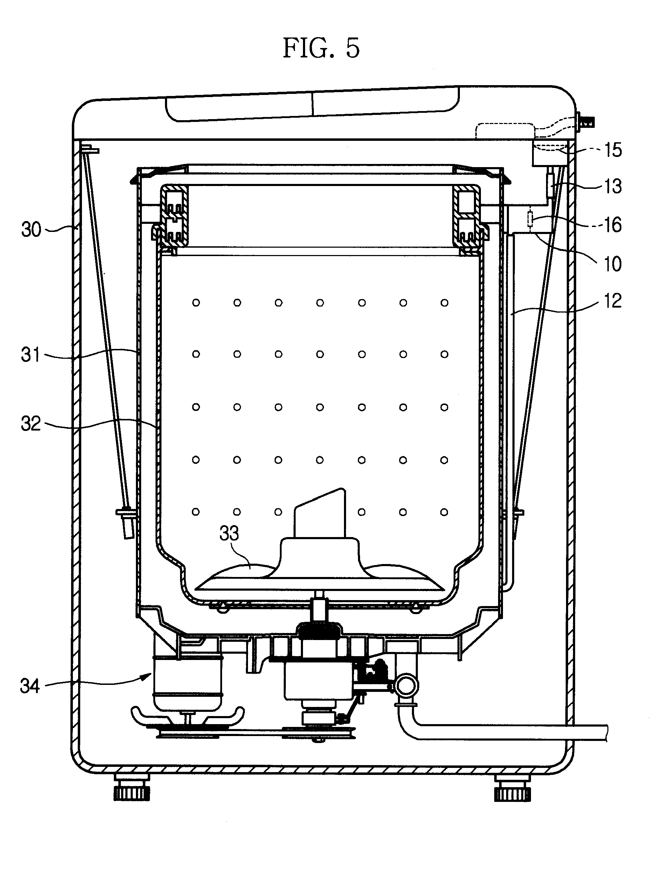

As shown in FIGURE 5, the washing machine is provided with a tub 31 disposed in an outer case 30 which receives water for washing laundry, and a drum 32 rotatably disposed in the tub 31. The washing machine further comprises a pulsator 33 disposed in the drum 32 to generate a flow of water for washing clothes while alternately rotating clockwise and counter clockwise, and a driving apparatus 34 mounted below the tub 31 to rotate the drum 32 and the pulsator 33.

The pressure and vibration sensing apparatus of the present invention applied to the washing machine is mounted on an outer surface of the tub 31 towards the upper end thereof. Specifically, the housing 10 of the pressure and vibration sensing apparatus is mounted on the outer surface of the tub 31 and the free end of pressure tube 12 extends from the housing 10 and connects to a lower region of the tub 31, so as to be in communication with the inside of the tub 31.

When the water level in the tub 31 is raised, air pressure inside the pressure tube 21 is varied due to the amount of the water that flows into the pressure tube 12. The pressure increase is transferred to the pressure sensor 15 through the pressure space of the housing 10, so that the pressure sensor 15 senses the level of water in the tub 31 based on the pressure variation sensed by the sensor 15. Additionally, vibration of the tub 31 is transferred to the housing 10, as described above, and is also sensed by the pressure sensor 15.

Since the pressure and vibration sensing apparatus has a pressure sensor that senses the pressure in a machine by sensing the pressure transferred into the housing through the inlet of the housing, and also senses the vibration of the machine by sensing the pressure variation in the housing through the movement of a vibrating member, there are advantageous effects in that the pressure and vibration sensing apparatus can be provided as a unitary apparatus having multiple functions, while allowing easy manufacturing with reduced manufacturing costs.

Furthermore, since the pressure sensor can sense a minute pressure variation in the case caused by vibration of the vibrating member, there is an advantageous effect in that the presence of the minute vibration and the magnitude thereof can be accurately sensed.

Although exemplary embodiments of the present invention have been shown and described, it would be appreciated by those skilled in the art that changes may be made in these embodiments without departing from the principles of the invention, the scope of which is defined in the claims and their equivalents.

## Claims

1. Apparatus for sensing pressure and vibration in a machine comprising a housing defining a chamber configured so that changes in pressure in the machine result in a corresponding change in pressure in the chamber, **characterised by** a pressure sensor associated with the chamber for sensing said change in pressure therein, the housing being configured for attachment to a machine and having a vibration sensitive member suspended in the chamber that vibrates in response to vibration of the machine to induce a pressure variation in the chamber when the machine vibrates, said pressure sensor also being operable to sense said pressure variation caused by vibration of the vibration sensitive member.

2. Apparatus according to claim 1, comprising a pressure sensor case, the pressure sensor being disposed in the pressure sensor case remote from the chamber.

3. Apparatus according to claim 1 or claim 2, wherein the vibration sensitive member is mounted to the housing within the chamber by means of a resiliently deformable connecting element that connects the vibration sensitive member to the housing in a substantially air tight manner.

4. Apparatus according to claim 3, wherein the vibration sensitive member includes an aperture therein to allow air to pass through the vibration sensitive member to enable changes in pressure to be detected by the pressure sensor.

5. A pressure and vibration sensing apparatus, comprising:
a case adapted to be mounted in a machine which generates vibration, the case having an inlet communicated with a source of pressure;
a pressure sensor sensing pressure variation in the case;
and a vibrating member movably disposed in the case to induce the pressure variation in the case when vibration is generated in the machine.

6. The pressure and vibration sensing apparatus according to claim 5, wherein the pressure sensor is disposed at the opposite side of the inlet of the case.

7. The pressure and vibration sensing apparatus according to claim 6, wherein the vibrating member comprises a stretchable connecting member substantially air-tightly connecting an outer periphery of the vibrating member and an inner surface of the case while allowing movement of the vibrating member, and an air vent penetrating the vibrating member.

8. The pressure and vibration sensing apparatus according to claim 7, wherein the vibrating member is disposed between the inlet of the case and the pressure sensor in the case.

9. The pressure and vibration sensing apparatus according to claim 5, further comprising: an outlet formed at the opposite side of the inlet of the case; and a connecting tube connecting the outlet and the pressure sensor to sense the pressure variation transferred through the outlet, the vibrating member being disposed between the inlet and the outlet of the case.

10. The pressure and vibration sensing apparatus according to claim 9, wherein the vibrating member comprises a stretchable connecting member substantially air-tightly connecting an outer periphery of the vibrating member and an inner surface of the case while allowing movement of the vibrating member, and an air vent penetrating the vibrating member.

11. The pressure and vibration sensing apparatus according to claim 10, wherein the vibrating member is disposed between the inlet of the case and the pressure sensor in the case.

12. The pressure and vibration sensing apparatus according to claim 5, wherein the pressure sensor comprises a piezoelectric element.

13. The pressure and vibration sensing apparatus according to claim 5, further comprising an amplifying circuit to amplify an electrical signal output from the pressure sensor.
